(19) Europäisches Patentamt
European Patent Office
Office européen des brevets

(11) **EP 4 194 803 A1**

(12) **EUROPEAN PATENT APPLICATION**

(43) Date of publication:
**14.06.2023 Bulletin 2023/24**

(21) Application number: **22211379.7**

(22) Date of filing: **05.12.2022**

(51) International Patent Classification (IPC):
**G01B 11/24** (2006.01)   **G01C 1/00** (2006.01)
**G01S 7/48** (2006.01)

(52) Cooperative Patent Classification (CPC):
**B60D 1/62; G01B 11/26; G01S 7/4808**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021 FI 20216249**

(71) Applicant: **Cargotec Finland Oy**
**33101 Tampere (FI)**

(72) Inventors:
• **Vihonen, Juho**
**36240 Kangasala (FI)**
• **Aref, Mohammad M.**
**33610 Tampere (FI)**

(74) Representative: **Papula Oy**
**P.O. Box 981**
**00101 Helsinki (FI)**

(54) **HITCH-ANGLE ESTIMATION FOR TRACTOR-TRAILER COMBINATION**

(57) Disclosed is an arrangement and a method for hitch-angle estimation for a tractor-trailer combination. The arrangement comprising one or more sensors for providing one or more point clouds comprising a representation for the trailer as seen from one or more measurement positions at the tractor, a first measurement for the speed of the tractor, and a second measurement for an orientation of the tractor. The arrangement also comprises a computing unit configured to obtain one or more first values indicating the hitch angle between the tractor and the trailer, determined from the one or more point clouds, obtain a second value indicating the rate of change for the hitch angle, determined from the first and the second measurement, and fuse the one or more first values and the second value to provide an estimate for the hitch angle between the tractor and the trailer.

FIG. 1

EP 4 194 803 A1

## Description

### FIELD

An invention relates to hitch-angle estimation for a tractor-trailer combination. In particular, an invention relates to autonomous driving for terminal tractors.

### BACKGROUND

Driving a vehicular combination involving a tractor towing one or more trailers involves various driving tasks for which meticulous control of the machinery involved is required. This is particularly pertinent for autonomous driving, where input from a human operator is absent. For control system design, various factors involving not only practical working requirements but also regulatory compliance need to be taken into account. A specific use case are terminal tractors, which have their own requirements for operation.

### OBJECTIVE

An objective is to provide improved hitch-angle estimation for a tractor-trailer combination.
In particular, it is an objective to do the aforementioned to facilitate autonomous driving for a terminal tractor, for improved completion of driving tasks both in forward and backward motion.

### SUMMARY

The present disclosure involves hitch-angle estimation for a tractor-trailer combination. The tractor-trailer combination comprises a towing vehicle, which can also be called a "tractor unit" or simply a "tractor", and a trailer to be towed by the tractor unit. A "tractor unit" or a "tractor" may thus refer to an engineering vehicle specifically designed to deliver a high tractive effort, or torque, at slow speeds, for the purposes of hauling a trailer. For this purpose, it may be arranged for, at least, rear-wheel drive. The tractor-trailer combination can be a heavy-duty driving system. The tractor or the tractor-trailer combination need not be feasible for registration for road traffic. In particular, the tractor may be a terminal tractor, or a semi-tractor. It can be specifically arranged for towing a semi-trailer. It may also be specifically arranged for operation at a cargo yard and/or an intermodal facility. The trailer may be arranged for transporting a container, such as an intermodal container. The trailer may be a chassis trailer. Additionally or alternatively, the trailer may be a gooseneck trailer. The trailer may be a semi-trailer such as an on-axle hitched semitrailer but also a multi-axle trailer. In the latter case, the computational solution disclosed herein may also be adapted to arithmetically correspond to a one-axle hitched case.
The tractor-trailer combination may be configured for autonomous driving. In particular, it may be capable of performing driving tasks without human input and/or with limited human input. It may also be capable of performing the driving tasks without data-communication to an external server. The driving tasks may include any or all tasks required for operation at cargo yard and/or an intermodal facility, for example manoeuvering the tractor for engaging to and/or detaching from the trailer. The driving tasks may involve forward and backward movements, possibly including turning.
The hitch angle may refer to the angle between the heading of the tractor and the heading of the trailer. An estimate for the hitch angle may be provided when the trailer is attached to the tractor and/or when the trailer is separate from the tractor. The heading of the tractor may refer to the longitudinal direction of the tractor, or the chassis thereof. The heading of the trailer may refer to the longitudinal direction of the trailer, or the frame thereof.
According to a first aspect, an arrangement for hitch-angle estimation for a tractor-trailer combination comprises one or more sensors for providing one or more point clouds comprising a representation for the trailer as seen from one or more measurement positions at the tractor, a first measurement for the speed of the tractor, and a second measurement for an orientation of the tractor. The arrangement may also comprise a computing unit configured to obtain one or more first values indicating the hitch angle between the tractor and the trailer, determined from the one or more point clouds, obtain a second value indicating the rate of change for the hitch angle, determined from the first and the second measurement, and fuse the one or more first values and the second value to provide an estimate for the hitch angle between the tractor and the trailer.
In an embodiment, the one or more sensors comprise two LIDARs or RGB-D cameras for providing the one or more point clouds. In view of the currently available technology, these technologies have been found to provide not only a favorable accuracy for the point cloud(s) but also a favorable speed of operation. In addition, using two separate LIDARs or RGB-D cameras has been found to markedly improve various aspects of the solution as it allows two separate point clouds comprising a representation for the trailer to be captured from different angles. In a further embodiment, the two LIDARs or RGB-D cameras comprise a first side-looking LIDAR or RGB-D camera for providing a first point cloud comprising a representation for a left side of the trailer and a second side-looking LIDAR or RGB-D camera for providing a second point cloud comprising a representation for a right side of the trailer. The one or more point clouds can thus comprise a representation for at least one of the right side of the trailer or the left side of the trailer, even when the hitch angle is large enough so that view from the first side-looking LIDAR or RGB-D camera to the left side of the trailer is blocked or view from the second side-looking LIDAR or RGB-D camera to the right side of the trailer is blocked.

According to a second aspect, a method for hitch-angle estimation for a tractor-trailer combination comprises receiving one or more point clouds comprising a representation for the trailer as seen from one or more measurement positions at the tractor. The method also comprises receiving a first measurement for the speed of the tractor and receiving a second measurement for an orientation of the tractor. The method may comprise determining from the one or more point clouds one or more first values indicating the hitch angle between the tractor and the trailer. The method may also comprise determining from the first and the second measurement a second value indicating the rate of change for the hitch angle. Finally, the method may comprise fusing the one or more first values and the second value to provide an estimate for the hitch angle between the tractor and the trailer.

With the arrangement or the method, a multilayer low-cost solution for low-noise estimation of the hitch angle between the tractor and the trailer may be provided. Importantly, the representation for the trailer can be provided by one or more point clouds allowing the orientation of the trailer with respect to the tractor to be identified irrespective of the shape of the trailer. In contrast to various imaging means available in the art, the solution therefore does not rely on simple distance-based identification means that would need a priori knowledge of the shape or size of the trailer, nor on simple kinematic models that calculate the hitch angle based on the movement of the trailer and its orientation in time. The solution can also be used without any identification means, such as tags, sensors or transmitters, positioned at the trailer.

Also importantly, the solution can utilize the point cloud(s) together with the other measurements, in a specific combination that allows providing a multi-layered solution. While point clouds have previously been suggested for similar control tasks, their sole use would subject any tractor-trailer combination with an automated driving system to high frequency noise, and even occlusions, to which classic noise cancellation, such as low-pass filtering, does not provide a widely applicable solution. The multilayer solution presented herein may be used in a manner where the point-cloud information complements the speed and orientation information of the tractor and vice versa. The algorithms for providing the one or more first values and the second value can be separate from each other and thereby lead to independent estimation for the hitch angle, adding to robustness of the hitch angle determination.

In an embodiment, receiving the one or more point clouds comprises receiving a first point cloud comprising a representation for a left side of the trailer and/or receiving a second point cloud comprising a representation for a right side of the trailer. The one or more point clouds can thus comprise a representation for at least one of the right side of the trailer or the left side of the trailer, even when the hitch angle is large enough so that view from one or more of the one or more measurement positions is blocked.

In an embodiment, the one or more measurement positions comprise two measurement positions between the cabin and the fifth wheel of the tractor, of which one is on the left and one is on the right side of the cabin. This has been found to allow an optimal balance for providing the one or more point clouds for the present purposes for a tractor having a cabin. In such a configuration, the effect of view blocking from various sources, including the cabin and the trailer itself, can be mitigated while the imaging devices used for providing the one or more point clouds can simultaneously be used for collision detection, for example for autonomous driving.

In an embodiment, the one or more first values are obtained based on a rigid transformation between the one or more point clouds and one or more reference point clouds comprising a reference representation for the trailer. This allows efficient identification of the trailer orientation in two, but also in three dimensions, where necessary. With the rigid transformation, no a priori knowledge of the shape or size of the trailer is required. The solution can also be used without any identification means, such as tags, sensors or transmitters, positioned at the trailer. The reference representation can be obtained on-site from one or more measurement positions at the tractor. Alternatively or additionally, it can be provided as information previously stored into a memory.

In an embodiment, the one or more first values are updated with a first frequency and the second value is updated with a second frequency, which is larger than the first frequency. This allows time-critical control information to be provided by utilizing the second value. On the other hand, more time may be dedicated for providing the first value(s) from the one or more point clouds, allowing improved accuracy and imaging resource utilization.

In an embodiment, the one or more first values are fused with the second value utilizing a stationary Kalman filter. While one or more other types of filters such as an unscented Kalman filter, a particle filter or some other estimator for real-time inference may also be used, utilizing the stationary Kalman filter has been found to provide marked improvement particularly for time-critical processing. In the present context, it can also be efficiently implemented as a PI-controller loop.

In an embodiment, the estimate for the hitch angle is provided by utilizing outlier rejection for the one or more first values. This efficiently allows the accuracy of the solution to be improved when there are objects near the trailer.

This holds also when view from any or all of the one or more measurement positions to the trailer is blocked and/or the one or more point clouds cannot be received, for example due to a malfunction in the sensor providing the point cloud(s). The outlier rejection may be performed for the one or more point clouds and/or for the one or more first values. In a further embodiment, the Welch function is used for the outlier rejection, which has been found to provide improved estimation with statistical robustness.

In an embodiment, the one or more first values are updated repeatedly upon receiving an updated point cloud replacing one or more of the one or more point clouds. This allows a repeated high-accuracy hitch angle determination from the one or more point clouds. Between such determinations, a lower accuracy hitch-angle determination may also be performed utilizing the second value.

In an embodiment, the orientation of the tractor is the heading of the tractor. While the orientation can be determined from one or more other measurements, such as from the orientation of a steering wheel and/or a wheel, of the tractor, using specifically the heading has been found to provide improved accuracy in the present context.

In an embodiment, the one or more first values comprises two or more different first values. This allows multiple separate algorithms to be used for improved accuracy determination of the hitch angle. This can particularly allow improved determination of the hitch angle under varying conditions.

According to a third aspect, a computer program product comprises instructions which, when the computer program product is executed by a computer, cause the computer to carry out the method of the second aspect and/or any of its embodiments alone or in combination.

According to a fourth aspect, an apparatus comprises the arrangement according to the first aspect and/or any of its embodiments alone or in combination. In particular, the apparatus may be a tractor or a tractor-trailer combination. It may be configured for semi- and/or fully-autonomous driving utilizing the arrangement. Any mechanical hitch angle sensor as a part of a heavy-duty tractor-trailer combination driving system, such as a pulse encoder, is subject to high forces/torque due to heavy payloads hauled on the trailer while requiring physical mounting with fragile sub-millimeter accuracy. If the system includes a protective rotary contact face between the tractor-trailer sliding mechanism, angular inaccuracies in the sensor readings become dominant, for example originating from slipping of the contact faces. Because of this, commercially available mechanical hitch angle sensors are rare. While non-mechanical solutions do exist, the particular setup as disclosed herein has its advantages in terms of accuracy and practicability, in the form of providing indirect sensing where the equipment required can be fully incorporated at the tractor.

The solution as disclosed herein may be arranged to exhibit a high degree of redundancy while being computing resource efficient. It can also be provided as robust and scalable with low maintenance requirements. The solution may be fully founded upon indirect sensing of the hitch, i.e., by requiring no mechanical contact to the moving mechanisms of the hitch. Importantly, the solution does not require any equipment at the trailer. The solution can also be arranged to provide a continuous input, as a substantially continuously updating estimate for a hitch angle, for motion control purposes, such as the hitch angle stabilization as a part of an electronic stability control system. The implementation can be provided utilizing model-based design with a high degree of platform-independence.

The solution may be configured for use for various purposes, including but not limited to the following, alone or in any combination:

- hitch angle stabilization for safe driving as a critical part of advanced driverassistance or autonomous driving systems
- dynamic obstacle avoidance by kinematic tractor-trailer dimensions calculus in autonomous driving
- high-precision local driving, such as reversing a trailer to a pose autonomously
- collision-free global path/trajectory planning for a-to-b autonomous driving mission simulations as a part of a tractor-trailer digital twin.

It is acknowledged that determining the articulation angle for motion control of tractors with semi-trailers is not a novel problem. A major advantage of the proposed solution is that it allows completely avoiding mechanical modifications and instrumentation of trailers without compromising on high accuracy. This can be a key element for handling public road trailers owned by third parties, as an example. Moreover, most mature solutions for determining the hitch angle are still mechatronic and thereby less applicable in the heavy-duty domain.

It is to be understood that the aspects and embodiments described above may be used in any combination with each other. Several of the aspects and embodiments may be combined together to form a further embodiment of the invention.

## BRIEF DESCRIPTION OF THE DRAWINGS

The accompanying drawings, which are included to provide a further understanding and constitute a part of this specification, illustrate examples and together with the description help to explain the principles of the disclosure. In the drawings:

**Fig. 1** illustrates a tractor-trailer combination according to an example,
**Fig. 2** illustrates an arrangement according to an example,
**Fig. 3** illustrates a tractor-trailer combination according to another example,
**Fig. 4** illustrates a tractor-trailer combination according to a further example,
**Fig. 5** illustrates a method according to an example,
**Fig. 6** illustrates an implementation according to an example,
**Figs. 7a-c** illustrate examples of time-synchronized recordings from an autonomous driving task for a tractor-trailer combination,
**Fig. 8** illustrates a point cloud according to an example, and
**Fig. 9** illustrates different estimates for the hitch angle.

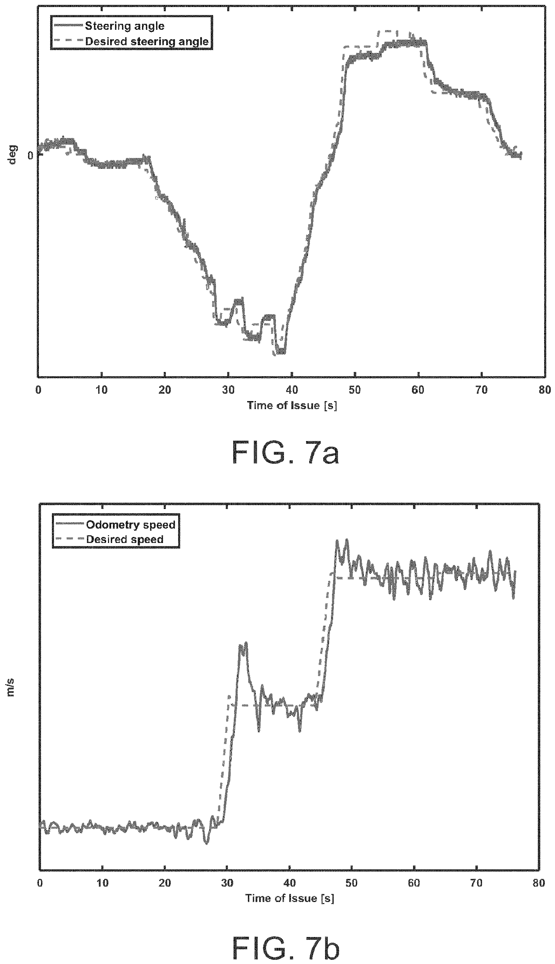

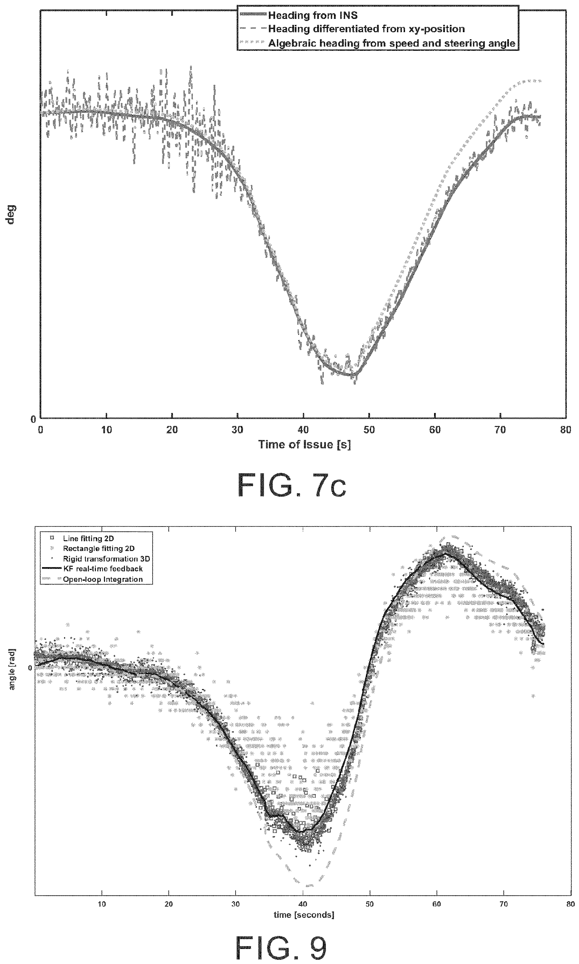

Figures 7a-c and 9 are illustrated with values increasing in the upwards direction along the vertical axis.

Like references are used to designate equivalent or at least functionally equivalent parts in the accompanying drawings.

## DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

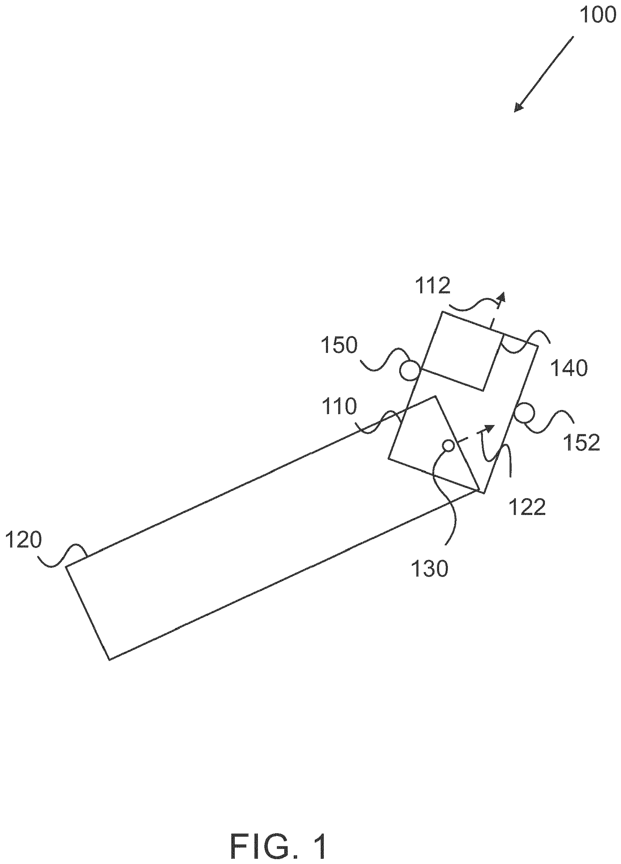

Figure 1 shows an example of a tractor-trailer combination 100. It may comprise a tractor 110 and a trailer 120, as disclosed above. The tractor may have a fifth wheel 130 for coupling the trailer to the tractor. The trailer may have a kingpin for coupling to the fifth wheel. The tractor may also have a cabin 140 but this is not always necessary, particularly when the tractor is arranged for autonomous driving. The cabin, if any, is typically located at the front of the tractor to optimize the view from the cabin. The fifth wheel may be located at the back of the tractor, behind the cabin, if any.

The tractor has a heading 112, which may be defined as its longitudinal direction, e.g. as the direction of movement when the wheels of the tractor are straight. Similarly, the trailer has a heading 122, which may similarly be defined as its longitudinal direction. The angle between the heading of the tractor and the heading of the trailer can be defined as the hitch angle of the tractor-trailer combination. As such, it becomes zero when the tractor and the trailer are headed in the same direction and non-zero when the directions diverge, as in the illustration. The transverse space occupied by the tractor-trailer combination changes depending on the hitch angle and it can exceed the space dedicated to the tractor, particularly upon turning. The curvature of the path of the tractor-trailer combination significantly affects how closely the trailer can follow the path of the tractor. Generally, the difference between the two paths needs to be taken into account independent of the driving direction (forward/backward) in real-time while driving. In autonomous driving, the same needs to be taken into account in the mission planning phase. The hitch angle determination can thus become important in both forward and backward driving, and cruising or docking.

The hitch-angle estimation may be used for controlling the motion of the tractor-trailer combination 100, in particular in autonomous driving. An estimate for the hitch angle may be used as an input to a feedback control system for controlling the motion of the tractor-trailer combination. In a specific example, the solution may be arranged for hitch-angle estimation for backward driving. The solution may also be used, for example, for a-to-b driving mission planning and/or static or dynamic obstacle avoidance. The solution may be arranged for regulatory compliance, including ISO13849, ISO26262 and CE marking. As an example, the solution may be configured for prevention of jackknifing or trailer swing.

Illustrated also in Figure 1 are one or more measurement positions 150, 152 at the tractor 110.

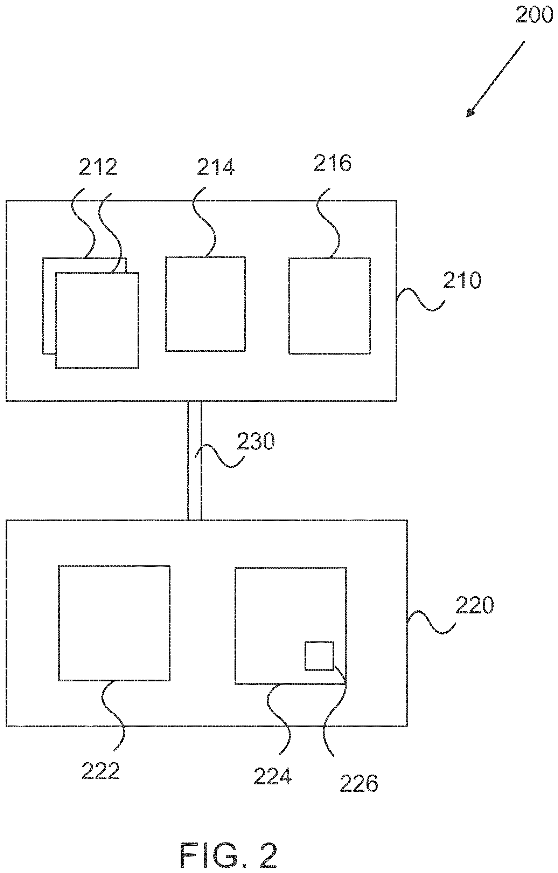

Figure 2 illustrates an arrangement 200 for hitch-angle estimation for the tractor-trailer combination 100 according to an example. The arrangement may comprise one or more sensors 210. These may be configured for providing one or more point clouds comprising a representation for the trailer 120 as seen from one or more measurement positions 150, 152 at the tractor 110. As is generally known in the art of imaging, a point cloud may refer to a set of data points in space comprising a plurality of data points. The data points may represent a shape or an object. The one or more point clouds may be two and/or three dimensional point clouds. Each data point may have its set of coordinates, for example in a Cartesian coordinate system. The one or more point clouds may be provided by a scanner such as a 3D scanner. They may be provided by a LIDAR and/or a RGB-D camera. Other alternatives include a radar or other remote-sensing equipment. The one or more sensors for providing the one or more point clouds may be motorized for rotation. They may comprise or consist of solid-state LIDAR(s). The one or more point clouds may comprise any number of data points but it has been found that a minimum of 30 allows marked improvement in the applicability of the solution as it allows the computational solution to be utilized for Gaussian noise processes. In an embodiment, the number of data points is at least 50, whereas in another embodiment it is at least 100. These may correspond to data points of the representation for the trailer and it is possible to focus the one or more point clouds to contain data points that predominantly or fully are related to the representation for the trailer, e.g. any specific surface of the trailer and/or a container on the trailer. The number of data points may also be restricted, for example to 200 or less per point cloud to improve computational speed of the solution. In an embodiment, the number of data points is at most 500 per point cloud and in another embodiment less than 1000. However, depending on the computational solution available, even a large number may not pose a problem. A smaller number may nevertheless allow more flexibility with the application. The representation for the trailer may comprise or consist of a representation of the trailer and/or one or more objects moving together with the trailer, such as a container on the trailer. The representation may be a partial representation, such as a partial representation of a trailer and/or a container. It may include one or more features whose shape changes upon rotation of the trailer, as seen from the corresponding measurement position 150, 152. The one or more features may be represented by a set of data points in the one or more point clouds, where the size of the set may be 30 or more as described above.

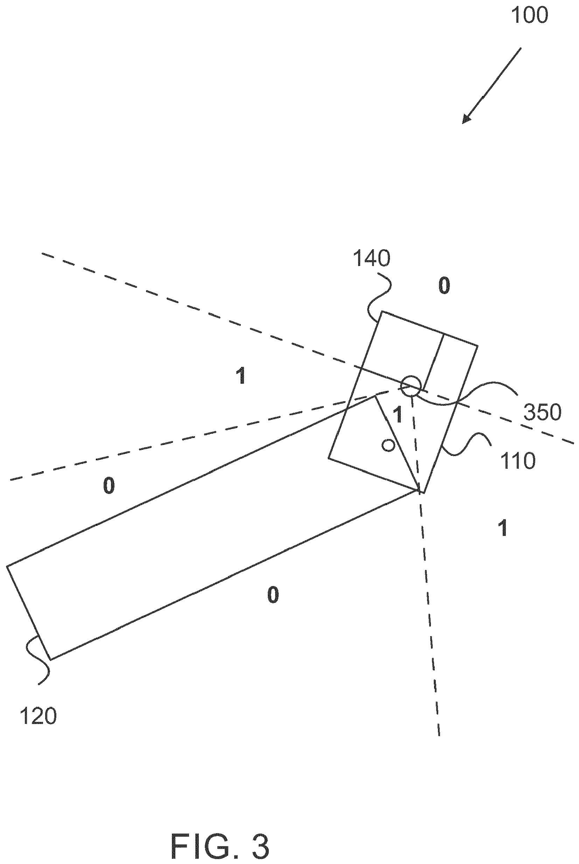

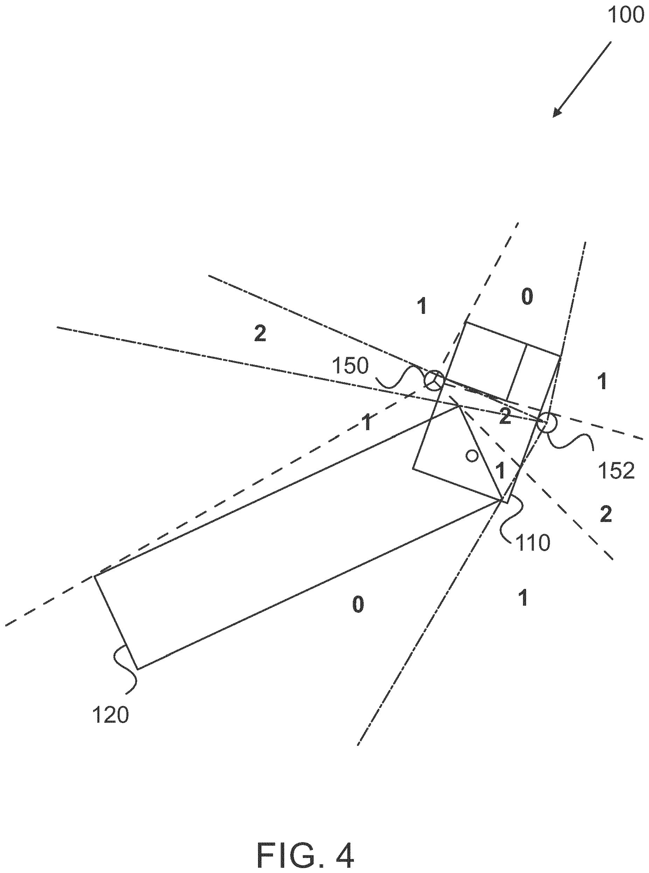

The one or more sensors 210 may comprise one or more sensors 212 positioned at the one or more measurement positions 150, 152 for providing the point clouds. In particular, the one or more sensors may comprise two sensors positioned at two separate measurement positions of the one or more measurement positions. These two measurement positions may be located behind any cabin 140 of the tractor 110 so that the cabin does not block the view from the measurement position to the trailer 120. They may be located at substantially equal height. Importantly, they may also be located outside the frame defined by the chassis of the tractor, for example one on the left side of the chassis and the other on the right side of the chassis. The two measurement positions can thereby protrude outwards from the tractor, for example in a manner similar to side-view mirrors of an automobile. The two measurement positions may be located so that the unobstructed fields of view from the two overlap both in front of the tractor and behind the two measurement positions in front of the trailer. In particular, this may be done in a plane where the two sensors are positioned. The two sensors may be LIDARs and/or RGB-D cameras. They may comprise a first side-looking LIDAR or RGB-D camera for providing a first point cloud, of the one or more point clouds, comprising a representation for a left side of the trailer and/or a second side-looking LIDAR or RGB-D camera for providing a second point cloud, of the one or more point clouds, comprising a representation for a right side of the trailer. The effect of this is illustrated in Figures 3 and 4.

The sensor (s) for providing the one or more point clouds may be fixedly positioned at the tractor 110. They may be fixedly or movably targeted for observing the trailer. They may have a horizontal field-of-view capability of 180-270 degrees or more, even 360 degrees. This allows them to be configured both for monitoring the trailer and forward direction. As indicated above, for this purpose they may also be mounted protruding left and/or right from the chassis of the tractor. The arrangement 200 and the sensor(s) may also be configured for obstacle detection on the left and/or right side of the tractor and/or the trailer. The sensor (s) may have a vertical field-of-view capability that is smaller in angular terms than their horizontal field-of-view capability. For example, they may have a vertical field-of-view capability of 45 degrees or more and/or 120 degrees or less, or even 90 degrees or less.

Figure 3 illustrates a tractor-trailer combination 100 according to an example, where a single sensor is used for providing the one or more point clouds. In this example, the single sensor is positioned at a central measurement position 350 to optimize its view for both sides of the trailer 120. Even then, its field of view is limited when the hitch angle deviates from zero as the trailer, the cabin 140 or the chassis of the tractor 110 blocks the view for large areas. The dashed lines in the figure illustrate the limits of the field of view beyond corners of the trailer and the chassis, whereas the numbers '0' and '1' indicate the number of sensors capable of monitoring each area.

Figure 4 illustrates a tractor-trailer combination 100 according to an example, where two sensors are positioned at two separate measurement positions 150, 152, as described above, for providing the one or more point clouds. The dashed lines in the figure illustrate the limits of the field of view beyond corners of the trailer and the chassis for a first side-looking sensor, such as a LIDAR or a RGB-D camera, whereas the dash-dotted lines illustrate the limits of the field of view beyond corners of the trailer and the chassis for a second side-looking sensor, such as a LIDAR or a RGB-D camera. The numbers '0', '1' and '2' indicate the number of sensors capable of monitoring each area. The presence of two side-looking sensors markedly reduces the occluded areas and, importantly, allows the solution to be used for static and/or dynamic obstacle avoidance. While the occluded area in front of the tractor 110 remains relatively large in the illustrated example, it may be markedly reduced by further moving the two measurement positions 150, 152 away from the chassis, without sacrificing from trailer monitoring capability, as at least one of the side-looking sensors is capable of monitoring the trailer in any case.

With reference to Figure 2, the one or more sensors 210 may also be configured for providing a first measurement for the speed of the tractor and a second measurement for an orientation of the tractor, in particular for the heading 112 of the tractor. For this purpose, the one or more sensors may comprise a first separate sensor 214 for providing the first measurement and a second separate sensor 216 for providing the second measurement. However, the two measurements may also be provided by a single joint sensor. Either or both of the first and the second measurement may also be provided by a single joint sensor together with the one or more point clouds. For providing the first measurement, an odometer may be used. For providing the second measurement a gyroscope and/or an inertial navigation system (INS) may be used. The first and/or the second measurement may be provided with a fixed sample time.

The first measurement for the speed of the tractor and/or the second measurement for an orientation of the tractor may comprise or consist of one or more measurement results. The first measurement for the speed of the tractor may comprise or consist of a measurement of the speed of the tractor. Alternatively or additionally, it may comprise or consist of a measurement indicative of the speed of the tractor and/or a measurement proportional to or in correlation with the speed of the tractor. For example, it may involve a setpoint value for the speed of the tractor as using such a value may allow reduction of oscillation in the hitch-angle estimation. Similarly, the second measurement for an orientation of the tractor may comprise or consist of a measurement of the orientation of the tractor. Alternatively or additionally, it may comprise or consist of a measurement indicative of the orientation of the tractor and/or a measurement proportional to or in correlation with the orientation of the tractor. For example, it may involve a setpoint value for the orientation of the tractor as using such a value may allow reduction of oscillation in the hitch-angle estimation.

The arrangement 200 may comprise a computing unit 220, which may be configured for providing an estimate for the hitch angle. The computing unit may comprise a controller of the tractor 100, which controller may be configured for semi- and/or fully autonomous driving for the tractor-trailer combination 100. The computing unit may comprise one or more processors 222 and one or more memories 224. The one or more memories may comprise computer program code 226 configured to perform any computational and/or control act described herein. The computing unit may be arranged for wired and/or wireless connection 230 with the one or more sensors 210 for measurement data transmission from the one or more sensors to the computing unit. The connection may be a two-way connection, and the computing unit may be configured to control the one or more sensors through the connection.

The estimate for the hitch angle (between the tractor and the trailer) may comprise or consist of an estimate of the hitch angle and/or an estimate of the rate of change of the hitch angle. Alternatively or additionally, it may comprise or consist of an estimate indicative of the hitch angle and/or the rate of change of the hitch angle. Alternatively or additionally, it may comprise or consist of an estimate proportional to or in correlation with the hitch angle and/or the rate of change of the hitch angle. As an example, the estimate for the hitch angle may comprise or consist of an estimate of a position fixed with respect to the trailer as it may allow directly determining the hitch angle.

While the computing unit 220 may be remote from the tractor-trailer combination 100, in a specific embodiment it is provided at the tractor-trailer combination. As such, the whole arrangement 100 may be provided at the tractor-trailer combination, which therefore can also be provided as a totally autonomous operator, which does not need a data link to an external server for controlling the movement of the tractor 110 or the trailer 120.

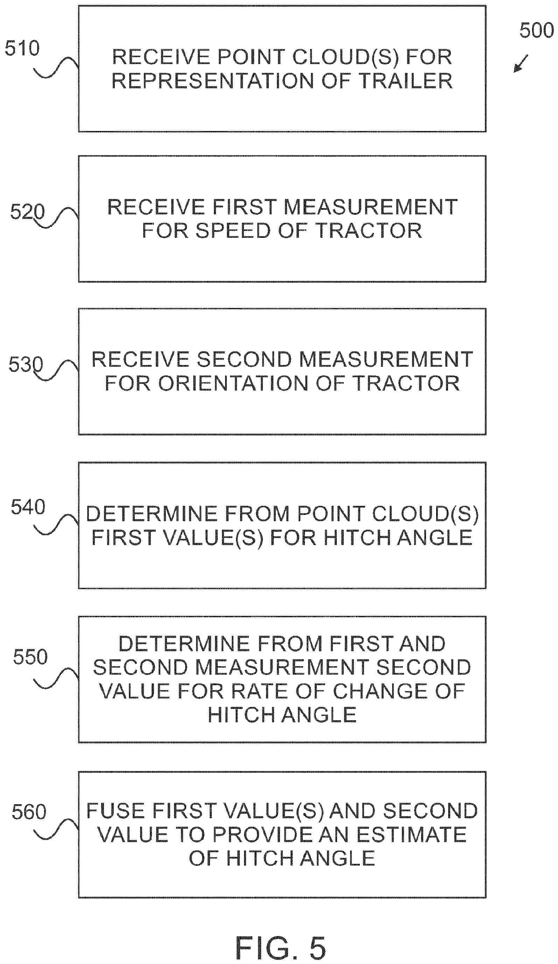

Figure 5 shows an example of a method 500 for hitch-angle estimation for a tractor-trailer combination. The method comprises several parts which may be performed independently from each other and/or in any order. Any parts of the method can also be performed repeatedly. In particular, the computing unit 220, or the computer program code 226 thereof, may be configured for any actions described in the following, in conjunction with the method. Any features described in conjunction with the arrangement 200 can also be applied in conjunction with the method.

One or more point clouds comprising a representation for the trailer as seen from one or more measurement positions at the tractor may be received 510, various examples for which are described also above in conjunction with the arrangement 200. The one or more point clouds may be LIDAR and/or RGB-D point clouds. These can provide a drift-free high-noise absolute reference for real-time sensor fusion. Because of their inherent low-bandwidth and noisy nature, the point clouds can rarely be used for high performance robotic control as such, in solutions other than those disclosed herein. A first point cloud comprising a representation for a left side of the trailer and/or a second point cloud comprising a representation for a right side of the trailer may also be received. Monitoring the two different sides of the trailer facilitates determining the hitch angle from the one or more point clouds regardless of the orientation of the trailer.

One or more first values indicating the hitch angle between the tractor and the trailer may be determined 540 from the one or more point clouds. The one or more first values may be obtained based on a rigid transformation between the one or more point clouds and one or more reference point clouds comprising a reference representation for the trailer. The reference representation may be obtained from a database or from any digital data source, for example from the one or more memories 224. Alternatively or additionally, the reference representation may be obtained on-site by imaging the trailer, for example by the one or more sensors 210, 212 for providing the one or more point clouds. An optimization algorithm may determine, how much the one or more point clouds need to be rotated by a rigid transformation to align so that their representation for the trailer aligns with the reference representation and, based on this, determine the rotation of the trailer with respect to the tractor, and thereby the hitch angle. This allows also determining not only a two-dimensional, but also a three-dimensional rotation of the trailer with respect to the tractor. The rigid transformation may comprise or consist of one or more rotations and/or translations. It may be performed by minimizing a sum of weighted squares of errors between point data y and a transformed point data function $\acute{y}$, for example by minimizing the following:

$$\chi^2(\mathbf{p}) = \Sigma[(\mathbf{y}(t_i) - \acute{\mathbf{y}}(t_i;\mathbf{p}))/\sigma(y_i)]^2$$
$$= (\mathbf{y} - \acute{\mathbf{y}}(\mathbf{p}))^T \mathbf{W} (\mathbf{y} - \acute{\mathbf{y}}(\mathbf{p})) \qquad (\text{Eq. 1})$$
$$= \mathbf{y}^T\mathbf{W}\acute{\mathbf{y}} - 2\mathbf{y}^T\mathbf{W}\acute{\mathbf{y}} + \acute{\mathbf{y}}^T\mathbf{W}\acute{\mathbf{y}},$$

where the sum $\Sigma$ is taken over index i. Here, the representation for the trailer is transformed ($\acute{\mathbf{y}}$) with respect to the reference representation ($\mathbf{y}$) or vice versa. The weighting matrix $\mathbf{W}$ may be a diagonal matrix, for example of the form $W_{ii}=1/(y_i)^2$ for the diagonal elements. Because the sum of squares of normally distributed variables (or weighted residuals between $\mathbf{y}$ and $\mathbf{y}$ in our case) is distributed as the chi-squared distribution, this scalar-valued goodness-of-fit measure used may be referred to as the chi-squared error criterion. The function maps each point in the set $\mathbf{y}$ to $\mathbf{y}$ to solve the parameter vector $\mathbf{p}$, which may include unknowns such as the hitch angle. As an example, the parameter vector $\mathbf{p}$ may have a length of six or more, as it may comprise or consist of three rotations and three translations spanning the three-dimensional space for rotations and translations. The formulation can fundamentally be presented as a mathematical inverse problem so that the hitch angle may be provided as an algebraic estimate.

One or more first values, as estimates for the hitch angle, may be extracted from the one or more point clouds. For example, two or more different first values may be determined by utilizing different algorithms, for example adapted to different situations. Some alternatives for providing the one or more first values are presented in the following. Any or all of these may be used, for example with event-based processing as described below. As a first example, a first value of the one or more first values can be obtained by line fitting. Various trailers, such as bomb cart trailers, have a bar-like front end. A front-bar shape of the trailer can be found by fitting a 2D line to the representation of the trailer. The hitch angle can then be solved from the orientation of the front-bar shape. Heuristics, such as the Random Sample Consensus (RANSAC) scheme, may also be used for determining the location and orientation of the front-bar shape. Said heuristic is particularly efficient in the low-outlier-ratio regime (e.g., below 50 %). Because the theoretical runtime grows exponentially with respect to the outlier ratio, the estimator significantly benefits from limiting its search space to a specific region of interest only. This heuristic solution can be provided with reduced computational complexity.

As a second example, a first value of the one or more first values can be obtained by rectangle fitting. Various trailers have a rectangle shape, or L-shaped structural details, if viewed from the top. The first value may thus be obtained purely heuristically by determining a 2D rectangle optimizes a fit for the representation of the trailer, for example based on a variance criterion. All possible representations of a rectangle may be iterated and once a rectangle with optimized, e.g. the smallest, variance in length and width dimensions is obtained, the hitch angle can be provided from the orientation of the rectangle. For outlier rejection, a z-test may also be used to determine if the points of the one or more point clouds originate from the same normal distribution. As above, a significant benefit may be obtained by limiting the search space to a specific region of interest only, i.e., to a 3D space where the trailer is likely found. This heuristic solution can also be provided with reduced computational complexity.

As a third example, a first value of the one or more first values can be obtained by a rigid transformation, for example in accordance with Eq. 1. For the rigid transformation, no prior shape assumptions are required. In one implementation, the Levenberg-Marquardt algorithm may be used for this purpose. Given two point clouds, i.e. the representation for the trailer and the reference representation, the hitch angle may be solved from a local optimization problem. For this purpose, an initial guess can be provided, followed by iterative refinements of the hitch angle to keep decreasing an objective function. In particular, the Welch function may be used for outlier rejection, which has been found to provide particular statistical robustness in the present context. The rigid transformation may also be used in real-time simultaneous localization and mapping (SLAM) applications. It has been found to have improved accuracy over heuristic alternatives and it can be used alone or in combination with either or both of the heuristic alternatives described above. The solution has improved scalability due to its statistically robust properties.

In accordance with the present disclosure, including all three examples presented above, the one or more first values may in any case be determined by focusing the one or more point clouds to a 3D space where the representation for the trailer is likely to be found. Such a region of interest may cover the 3D volume typically occupied by a front end of the trailer. This way, the number of processed data points per point cloud may be reduced to some 100-200 from about 100 000, for example. When a first point cloud comprises a representation of a left side of the trailer and/or a second point cloud comprises a representation of a right side of the trailer, the left side may include, at least, a part of the left side of the front end of the trailer while the right side may include, at least, a part of the right side of the front end of the trailer.

Independent ways for providing an estimate for the hitch angle provides robustness to the solution. This may be culminated with time-critical sensor fusion, which can combine all estimates into one with less uncertainty than would be when the estimates were used individually.

A first measurement 520 for the speed of the tractor and a second measurement 530 for an orientation of the tractor may be received. The one or more point clouds and the first and the second measurements may be received in any order and repeatedly. In particular, the one or more point clouds may be received at a separate analyzing subsystem from an analyzing subsystem receiving the first and the second measurement value.

A second value indicating the rate of change for the hitch angle may be determined 550 from the first and the second measurement. The first and the second value may be determined separately and with different frequencies. For example, the second value may be updated with a frequency ("second frequency") larger than the update frequency for the one or more first values ("first frequency"), allowing time-critical estimation for the hitch angle to be performed utilizing the second value. Similarly, the second measurement may be received with a frequency, for example coinciding with the second frequency, larger than the frequency, for example coinciding with the first frequency, with which the one or more point clouds are received. As an example, The one or more first values may be determined from event-based processing of the one or more point clouds, e.g. when a point cloud becomes available. An event may refer to a significant change in state, for example to a completion of a scan by the one or more sensors for providing one or more of the one or more point clouds, e.g. a 360 degree scan and/or a horizontal scan. As an example, the update frequency ("a first frequency") for the one or more first values may be less than 100 Hz, for example 10-20 Hz. The second value may be determined from time-critical processing of the first and the second measurement, for example by closed-loop propagation of the speed of the tractor and the orientation of the tractor. The expression "time critical" may refer to continuously available states, such as the speed and orientation of the tractor. As an example, they can be updated at a frequency ("second frequency") of 100 Hz or more, for example 100-200 Hz. This can be available from the CAN bus with a minimal clock jitter.

Sole use of point clouds for the hitch-angle estimation would subject any tractor-trailer automated driving system to high frequency noise, even occlusions, to which no classic noise cancellation, such as low-pass filtering, will provide a widely applicable solution. As an example, for planar tractor-trailer kinematic motion, a heading rate for the trailer can be expressed as follows:

$$d\theta_2/dt = v \sin(\theta_1-\theta_2)/L, \qquad\qquad (Eq.\ 2)$$

where v is the speed of the tractor, L is the distance between the kingpin and the actual or effective back-axle center of the trailer, $\theta_1$ is the heading of the tractor and $\theta_2$ is the heading of the trailer, expressed in the same coordinate frame with $\theta_1$. Based on Eq. 2, the heading of the trailer may be propagated over time bounded by changes in the heading of the tractor. Similar equation may be formulated for other orientations of the tractor and the trailer but the equation for the heading is explicitly shown here as it has been found to provide enhanced performance for the hitch-angle estimation. The expression shown here for the trailer's heading rate is not only relevant for hitch angle stabilization control, but also for safe local/global path planning. The motion states of the trailer can be simulated beforehand as a part of a digital twin allowing safe trajectory planning beforehand, given an a-to-b autonomous driving mission with static obstacles on the route.

The one or more first values may be combined with the motion state of the tractor by robust sensor fusion. The estimate can be provided by indirect sensing for the hitch angle, e.g., by requiring no sliding mechanisms between the tractor and the trailer. No equipment is required at the trailer. The one or more first values and the second value may be fused 560 to provide an estimate for the hitch angle between the tractor and the trailer. This may be used for providing time-critical propagation of the hitch angle, where the one or more first values, as point-cloud based hitch-angle estimates, are fused, whenever they arrive, with the second value representing the hitch rate of the trailer. Any method generally available to a person skilled in the art of sensor fusion for this purpose may be used. However, stationary Kalman filtering, in particular, may be used. Other alternatives include an unscented Kalman filter, a particle filter, or some other estimator for real-time inference, but the stationary Kalman filter has been found particularly effective for time-critical processing in the present context. It can be used with a minimal number of floating point operations per cycle and can be implemented as a PI-controller loop for this particular class of problems. The fusion, or the filtering, may be performed utilizing the Welch function for outlier rejection, allowing time-critical estimation for the hitch angle, in particular by low-latency propagation of the hitch angle, even if the one or more sensors for providing the one or more point clouds become occluded, temporarily or otherwise.

The internal states of the tractor, such as the speed and the orientation, can be high-bandwidth quantities subject to a drift if propagated in open-loop over time. To remove the drift, the sensor fusion can be performed with an absolute reference, the one or more point clouds, in a complementary way with the internal states of the tractor. In this way, a low-noise low-latency input for high performance robotic motion control can be provided. The solution can be used, for example, in real-time docking applications as well.

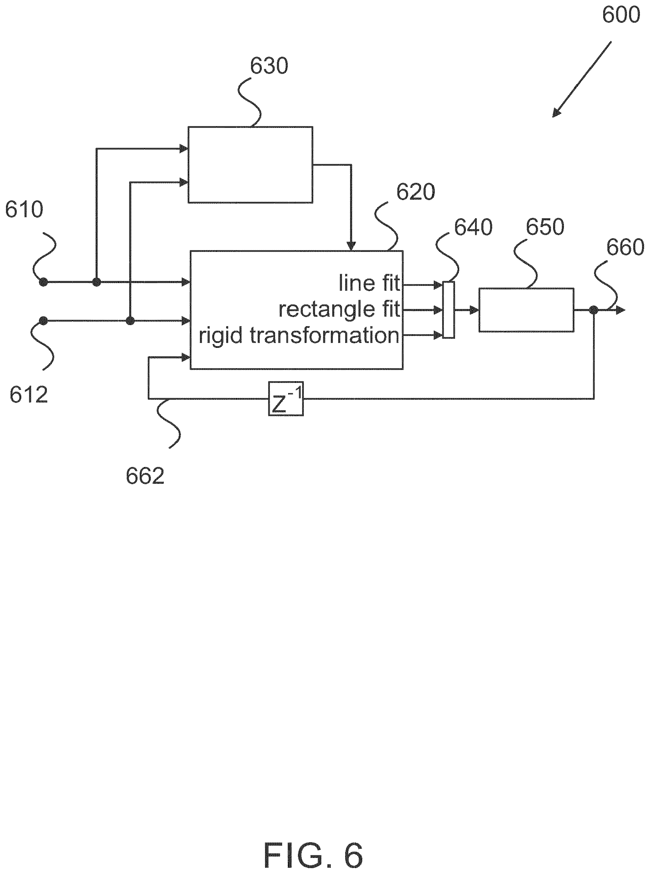

Figure 6 shows an example of an implementation of the solution. The computing unit may be configured for this purpose. In particular, it may be configured for determining the one or more first values with a first subsystem and the second value with a second subsystem, separate from the first subsystem. Finally, it may be configured to fuse the one or more first values and the second value by sensor fusion. The present solution allows model-based estimation for the hitch angle. This can be used for model-based control for autonomous movement of a tractor-trailer combination 100. In particular, the solution can provide a substantially continuous, or time-critical, updating of the estimate for the hitch angle, for example for stabilization for the hitch angle.

The one or more point clouds are received 610, 612 from the one or more sensors. This may be event-based receipt of point clouds, for example when the one or more sensors complete a scan, e.g. a 360 degree horizontal scan, for obtaining a point cloud of the one or more point clouds. In particular, two point clouds of the one or more point clouds may be received from separate measurement positions. One 610 may comprise a representation of the left side of the trailer and the other 612 of the right side of the trailer. These may be received simultaneously or at different times. They may be received with the same or different frequency. The one or more point clouds may be processed with point-cloud processing for providing the one or more first values. This may be performed by a point-cloud processing subsystem 620. Any or all of the alternatives for providing the one or more first values, as described above, may be used here, for example the rigid transformation. Because the alternatives can, by design, provide an estimate for the hitch angle independent of each other, they can add to the robustness of the solution. Estimation can thus become multi-layered, providing a potential safety benefit. Each point cloud arriving at the point-cloud processing may be processed separately for providing one or more first values.

The point-cloud processing may be event-based. It may be triggered when a new point cloud of the one or more point clouds arrives, for example whenever a new point cloud arrives from either of the two separate measurement positions. This may be configured to trigger determination of one or more first values of the one or more first values, for example by rigid transformation and/or some other alternative(s). This triggering may be enforced by a change sampling subsystem 630. Change-based triggering may be enforced by the subsystem when a new point cloud of the one or more point clouds arrives. It may involve an "OR" gate so that a new point cloud from any of the measuring positions causes the triggering. Also other conditions can be added to the "OR" gate, such as turning off the hitch-angle estimation in case no trailer is coupled to the tractor. Another "watch-dog" style condition may be set based on the computing resources available, e.g. preventing or delaying the triggering, if a point cloud is still being processed when a new one arrives. The processing load for point-cloud processing can be largely dependent on the number of data points (e.g. 2D or 3D) in the one or more point clouds and can be distributed to two or more separate computing threads or dedicated computing hardware.

Once a point cloud is processed, the resulting one or more first values 640 can be provided for sensor fusion 650, which can be provided as its own subsystem. The sensor fusion may run continuously with a fixed execution time, which may be adjusted for time-critical operation. The sensor fusion does not require constant input from the point-cloud processing but can instead accommodate the resulting one or more first values 640 whenever they become available.

The sensor fusion 650 may implement the determination of the second value from the first and the second measurement or it may be received from yet another subsystem, for example. Utilizing the second value, the sensor fusion may provide real-time motion feedback, for example utilizing the stationary Kalman filter. As time-critical inputs, the speed and orientation, in particular the heading, of the tractor may be used. Both may be updated with a frequency, such as the second frequency, which may be defined by the input. Because the one or more first values, which may stand as algebraic hitch-angle estimates, from the point-cloud processing may be provided event-based, they may have asynchronous update frequency. They may be processed with "sample and hold" principle (zero- order hold). As the sensor fusion may be time based, for example with a fixed cycle time, it can provide a guaranteed time-critical, low-latency propagation of the estimate for the hitch angle even when the one or more first values are not forthcoming, for example due to a temporary occlusion of one or more of the sensor(s) for providing the point cloud(s).

The point-cloud processing 620, which may be event-based, can run on a different thread and/or computing platform from the sensor fusion 650, which may be time-based. The latter may involve a fixed number of floating-point operations, thereby requiring a low-cost microcontroller to run at a minimum. The computing resource demand for the point-cloud processing can be adjusted independent of that of the sensor fusion, for example by altering the number of data points in the point clouds, the algorithms' parameters, and/or simply reducing the number of alternatives used for providing the one or more first value (i.e. providing less fewer first value(s) for a single point cloud).

After the estimate for the hitch angle is determined at the sensor fusion 650, it can be provided for further use 660, such as controlling the movement of the tractor, for example by feedback control. It may also be fed back for closed-loop hitch-angle estimation, for example to 662 the point-cloud processing. The hitch angle determined at the sensor fusion can thus serve as an initial value for determining the one or more first values at the point-cloud processing 620, for example as an initial value for the Levenberg-Marquardt algorithm.

The solution has been tested with various inputs. In particular, there are alternatives for obtaining the orientation of the tractor, for example from the steering angle of the tractor or from the heading of the tractor, which in turn may be obtained from inertial sensing. It has been found that directly utilizing the heading of the tractor, for example by directly measuring it by a sensor such as an INS, provides superior results over ones differentiated from the position or the steering angle of the tractor. It is possible to arrive at an algebraic heading estimate by combining the wheelbase, the steering angle and the speed of the tractor via a simple geometry, but this estimate is prone to drift. It is thus easy to arrive at an algebraic heading (rate) via the speed, the steering angle and the slant distance from the vehicle's front axle and rear axle centers. This process, while being low cost, was however found to be prone to a multitude of error sources, such as tractor wheel slipping, statistical noise and other inaccuracies.

Figures 7a-c illustrate examples of time-synchronized recordings from an autonomous driving task for a tractor-trailer combination. Figure 7a illustrates a measurement of a steering angle of the tractor with respect to a desired steering angle, which may be provided as a setpoint value as a function of time. Figure 7b illustrates a measurement of the speed of the tractor, as measured by an odometer, with respect to a desired speed of the tractor, which may be provided as a setpoint value as a function of time. For the autonomous driving task, a path-following control mode may be used. As such, the control commands are illustrated as the desired values visualizing the dynamics of the tractor and the noise properties of the signals therein. As can be noted, both for the steering angle and the speed the measurements closely follow the desired values, indicating quality of the design and the controllers therein.

Figure 7c illustrates a heading of the tractor as a function of time. The heading follows from the steering angle, as illustrated in Figure 7a, and from the speed, as illustrated in Figure 7b. The heading of the tractor can be obtained through one or more alternatives, such as by direct measurement, a calculation or by a combination of the two. Examples include inertial sensing, calculating the tangent vector to the path/position and obtaining the heading based on the kinematics of the tractor in combination with the state of motion of the tractor. As illustrated in Figure 7c, a heading obtained from a direct measurement by an INS allows reduction in noise versus alternatives. In the first alternative illustrated here, the heading is determined from the position of the tractor, which acts as an absolute reference. In the second alternative, the algebraic heading estimate as described above is used. While easy to provide, it is prone to drift, as can be seen by comparing it to the INS and position based heading readings.

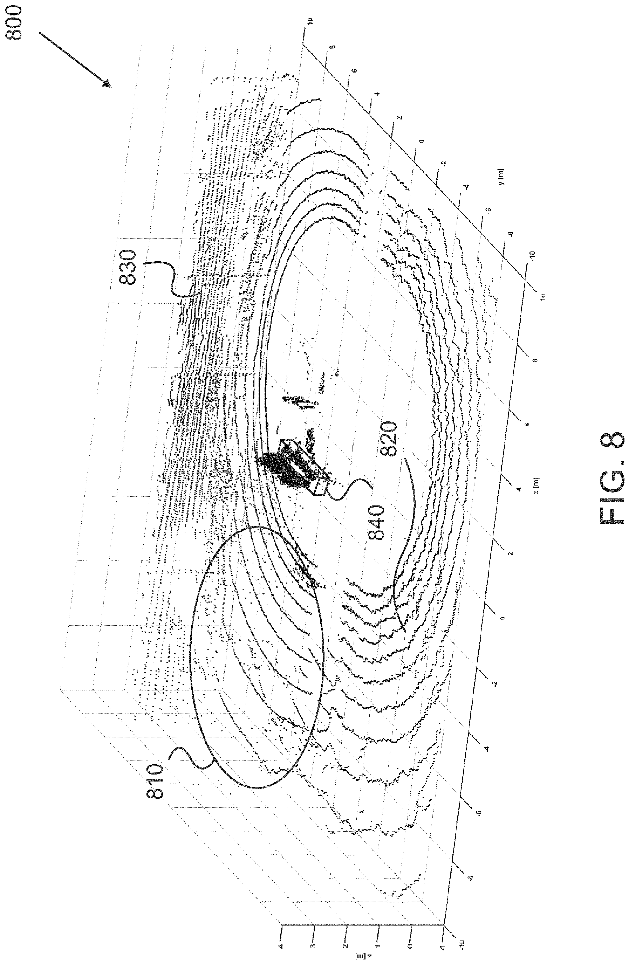

Figure 8 illustrates a point cloud 800. Such a point cloud may be obtained as a combination from a point cloud provided by a first side-looking LIDAR or RGB-D camera and a second side-looking LIDAR or RGB-D camera. These may be arranged at a right and a left side of the trailer. The figure illustrates a trailer coupled to the tractor to form a tractor-trailer combination with a container facing the point-cloud providing sensor. This may provide a dominant reason for the reduced number of points originating from the sides of the container. In the illustration, the point cloud comprises a part of the trailer and some container surfaces. Most of the data points of the point cloud may still originate from the surrounding due to the vertical field-of-view of the one or more sensors providing the point cloud(s), which here is 45 degrees. The event-based estimators can benefit from limiting the search space to a specific region of interest only. The figure illustrates a point cloud 810 representing the trailer and the container, circular patterns 820 resulting from sensor beams hitting the ground, a representation 830 of fences and fence posts or walls and a region of interest 840. The region of interest here is the front end of the trailer, illustrating the appearance thereof in the point cloud(s). The region of interest can crop the data points representing the front end of the trailer allowing greatly reduced computation for the algebraic estimator(s). The region of interest may cover the 3D volume typically occupied by the front end of the trailer and the one or more point clouds in accordance with this disclosure may be focused at the region of interest. This allows reducing the number of data points to be processed, for example to 100-200 out of about 100 000 per a scan of a single sensor for providing a point cloud.

Figure 9 illustrates algebraic estimates for the hitch angle (squares, stars and points), i.e. obtained from the one or more point clouds. It also illustrates a hitch angle rate propagated over time in an open-loop manner, i.e. without repeatedly utilizing the one or more point clouds for providing the one or more first values. Finally, the figure illustrates an estimate for the hitch angle obtained, in accordance with the present disclosure, by fusing the one or more first values and the second value. In the example, this estimate has been obtained as a time-critical Kalman filter estimate of the hitch angle and has been correspondingly referred to as KF real-time feedback. As illustrated, the multiple inputs (i.e. the algebraic estimates and the hitch angle rate) prevent the Kalman filter from drifting providing a smooth, low-noise estimate for the hitch angle, which may be used for robotic motion control.

Accordingly, the multiple inputs of the present solution may be used to prevent the sensor fusion, as performed for example by a Kalman filter, from drifting. This can provide a low-noise estimate for the hitch angle with improved smoothness. This can be advantageous particularly for robotic motion control, such as semi-autonomous and/or autonomous control of a tractor-trailer combination. However, without the multiple one or more first values from the one or more point clouds, i.e. algebraic estimates, or at least one of the first values, the output can be prone to drifting over time, as illustrated in Figure 9. This is illustrated in the open-loop integration of the hitch rate, where small errors accumulate to a notable extent. If any of the one or more first values were used as such for motion control purposes, the tractor-trailer combination was found to exhibit oscillatory behavior, as illustrated by the three data sets corresponding to the sole use of the algebraic estimates in Figure 9. This would compromise any high precision local driving tasks, such as reversing the trailer to a pose or coupling to a trailer. Such oscillation would also have the potential to significantly reduce the lifetime of the by-wire components, the electronic steering actuator in particular. Nonetheless, in spite of the high frequency noise in the first value(s), they contribute to the sensor fusion and may be considered valuable from a redundancy view that many certification processes either implicitly or explicitly enforce.

The solution provides cost-effectiveness by allowing solely indirect sensing of the hitch angle, markedly reducing any costs of maintenance. It can be integrated with existing robotic sensory setups, which have perception-based navigation as their primary function, i.e. it may significantly benefit from existing side-looking sensors for providing point clouds, which have a line of sight to the trailer. Such sensors are also cost-effective tools for trailer load detection, a safety critical piece of information, if e.g. an external automation system does not publish such information. The solution may be used for different trailer types, such as bomb carts, gooseneck, road approved, or any other type of trailers without significant additional engineering.

The estimation for the hitch angle can be based on stochastic inputs of the data points of the one or more point clouds. Raw data in this case usually suffers from jumps in the output of the algorithms. The bouncing values can cause disqualifying estimation values for inputting into a high accuracy control loop. However, the sensor fusion solution as disclosed may use interoceptive sensors to create consistent estimation output which is smooth enough to be used for a control loop feedback. This can be done without using high-order low pass filters which tend to compromise fast updates for smoothness.

The solution may be compiled into a stand-alone program on an independent process unit. For example, this can be a personal computer (PC) dedicated to a load handling process or ADAS (Advanced Driver-Assistance Systems) modules. For example, the computing unit may be configured for path following control and/or for reversing the trailer to a pose utilizing the hitch-angle estimation as disclosed.

The solution may also be extended to cover any necessary verifications and failure detections related to trailer positioning under the topic of OEDR (Object and Event Detection and Response) for L4 autonomous driving in accordance to SAE International's J3016. Validation and monitoring of the relationship between the motion state behaviours and the hitch-angle estimation can be used to detect anomalies and detect abnormal dynamics of the trailer if it is not compiling expected physics of the coupling.

Modularity of the subsystems facilitates integration of AI-based computer vision into closed-loop control. Object recognition thereby not only contributes to safety but allows specifying the region of interest freely from a computational efficiency and outlier rejection view. This facilitates transportation-as-a-service but also user-assisting semi-autonomous functions.

The computing unit as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art(s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Expressions such as 'plurality' are in this text to indicate that the entities referred thereby are in plural, i.e. the number of the entities is two or more.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, which fall within the purview of the claims. Although various examples have been described above with a certain degree of particularity, or with reference to one or more individual embodiments, those skilled in the art could make numerous alterations to the disclosed examples without departing from the scope of this specification.

**Claims**

1. An arrangement (200) for hitch-angle estimation for a tractor-trailer combination (100), comprising one or more sensors (210) for providing:

   - one or more point clouds comprising a representation for the trailer (120) as seen from one or more measurement positions (150, 152) at the tractor (110),
   - a first measurement for the speed of the tractor, and
   - a second measurement for an orientation of the tractor; and

   a computing unit (220) configured to:

   - obtain one or more first values indicating the hitch angle between the tractor and the trailer, determined from the one or more point clouds,
   - obtain a second value indicating the rate of change for the hitch angle, determined from the first and the second measurement, and
   - fuse the one or more first values and the second value to provide an estimate for the hitch angle between the tractor and the trailer.

2. The arrangement according to claim 1, wherein the one or more sensors comprise two LIDARs or RGB-D cameras for providing the one or more point clouds.

3. The arrangement according to claim 2, wherein the two LIDARs or RGB-D cameras comprise a first side-looking LIDAR or RGB-D camera for providing a first point cloud comprising a representation for a left side of the trailer and a second side-looking LIDAR or RGB-D camera for providing a second point cloud comprising a representation for a right side of the trailer.

4. A method (500) for hitch-angle estimation for a tractor-trailer combination (100), comprising:

   - receiving (510) one or more point clouds comprising a representation for the trailer as seen from one or more measurement positions at the tractor;
   - receiving (520) a first measurement for the speed of the tractor;
   - receiving (530) a second measurement for an orientation of the tractor;
   - determining (540) from the one or more point clouds one or more first values indicating the hitch angle between the tractor and the trailer;
   - determining (550) from the first and the second measurement a second value indicating the rate of change for the hitch angle; and
   - fusing (560) the one or more first values and the second value to provide an estimate for the hitch angle between the tractor and the trailer.

5. The method according to claim 4, wherein receiving the one or more point clouds comprises receiving a first point cloud comprising a representation for a left side of the trailer and/or receiving a second point cloud comprising a representation for a right side of the trailer.

6. The arrangement according to any of claims 1-3 or method according to claim 4 or 5, wherein the one or more measurement positions comprise two measurement positions between the cabin and the fifth wheel (130) of the tractor, of which one is on the left and one is on the right side of the cabin.

7. The arrangement according to any of claims 1-3 or the method according to any of claims 4-6, wherein the one or more first values are obtained based on a rigid transformation between the one or more point clouds and one or more reference point clouds comprising a reference representation for the trailer.

8. The arrangement according to any of claims 1-3 or method according to any of claims 4-7, wherein the one or more first values are updated with a first frequency and the second value is updated with a second frequency, which is larger than the first frequency.

9. The arrangement according to any of claims 1-3 or method according to any of claims 4-8, wherein the one or more first values are fused with the second value utilizing a stationary Kalman filter.

10. The arrangement according to any of claims 1-3 or method according to any of claims 4-9, wherein the estimate for the hitch angle is provided by utilizing outlier rejection for the one or more first values.

11. The arrangement according to any of claims 1-3 or the method according to any of claims 4-10, wherein the one or more first values are updated repeatedly upon receiving an updated point cloud replacing one or more of the one or more point clouds.

12. The arrangement according to any of claims 1-3 or the method according to any of claims 4-11, wherein the orientation of the tractor is the heading (112) of the tractor.

13. The arrangement according to any of claims 1-3 or the method according to any of claims 4-12, wherein the one or more first values comprises two or more different first values.

14. A computer program product comprising instructions which, when the program is executed by a computer, cause the computer to carry out the method (500) of any of claims 4-13.

15. A tractor (110) or a tractor-trailer combination (100) comprising the arrangement (200) according to any of claims 1-3 or 6-13.

FIG. 1

200

212    214    216

210

230

220

222    224    226

# FIG. 2

FIG. 3

FIG. 4

510 RECEIVE POINT CLOUD(S) FOR
REPRESENTATION OF TRAILER

500

520 RECEIVE FIRST MEASUREMENT
FOR SPEED OF TRACTOR

530 RECEIVE SECOND MEASUREMENT
FOR ORIENTATION OF TRACTOR

540 DETERMINE FROM POINT CLOUD(S)
FIRST VALUE(S) FOR HITCH ANGLE

550 DETERMINE FROM FIRST AND
SECOND MEASUREMENT SECOND
VALUE FOR RATE OF CHANGE OF
HITCH ANGLE

560 FUSE FIRST VALUE(S) AND SECOND
VALUE TO PROVIDE AN ESTIMATE
OF HITCH ANGLE

FIG. 5

FIG. 6

FIG. 7a

FIG. 7b

21

FIG. 7c

FIG. 9

FIG. 8

Europäisches
Patentamt

European
Patent Office

Office européen
des brevets

# EUROPEAN SEARCH REPORT

**Application Number**

**EP 22 21 1379**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 251 993 A (HANGZHOU FABU TECH CO LTD) 13 August 2021 (2021-08-13) | 1-5,8, 13-15 | INV. G01B11/24 |
| Y | * paragraphs [0056], [0080] - paragraph [0091] *<br>* paragraph [0106] - paragraph [0118] *<br>* figures * | 6,7,9-12 | G01C1/00<br>G01S7/48 |
| | ----- | | |
| X | US 2021/356261 A1 (JIN YUHE [CN] ET AL) 18 November 2021 (2021-11-18) | 1-6,8,9, 13-15 | |
| Y | * paragraph [0074] - paragraph [0079] * | 6,7,9-12 | |
| | ----- | | |
| X | Patrik Nyberg: "Stabilization, Sensor Fusion and Path Following for Autonomous Reversing of a Full-Scale Truck and Trailer System",<br>Master of Science in Electrical Engineering,<br>31 December 2016 (2016-12-31),<br>XP055655338,<br>Retrieved from the Internet:<br>URL:https://liu.diva-portal.org/smash/get/diva2:952744/FULLTEXT01.pdf<br>[retrieved on 2020-01-07] | 1-5,8, 10,11, 13-15 | |
| | | | **TECHNICAL FIELDS SEARCHED (IPC)** |
| | | | G01B |
| Y | * page 9 - page 21; figures * | 6,7,9-12 | G01S |
| | ----- | | G01C |
| Y | US 2020/143174 A1 (LUO YI [US] ET AL) 7 May 2020 (2020-05-07)<br>* paragraph [0027] *<br>* paragraph [0054] * | 7,12 | |
| | ----- | | |

The present search report has been drawn up for all claims

| Place of search | Date of completion of the search | Examiner |
|---|---|---|
| The Hague | 12 April 2023 | Schmidt, Rémi |

EPO FORM 1503 03.82 (P04C01)

## ANNEX TO THE EUROPEAN SEARCH REPORT
## ON EUROPEAN PATENT APPLICATION NO.

**EP 22 21 1379**

This annex lists the patent family members relating to the patent documents cited in  the above-mentioned European search report.
The members are as contained in the European Patent Office EDP file on
The European Patent Office is in no way liable for these particulars which are merely given for the purpose of information.

**12-04-2023**

| Patent document cited in search report | | | Publication date | Patent family member(s) | | | Publication date |
|---|---|---|---|---|---|---|---|
| CN 113251993 | A | | 13-08-2021 | NONE | | | |
| US 2021356261 | A1 | | 18-11-2021 | AU | 2019382367 | A1 | 08-07-2021 |
| | | | | CN | 111288930 | A | 16-06-2020 |
| | | | | EP | 3885796 | A1 | 29-09-2021 |
| | | | | US | 2021356261 | A1 | 18-11-2021 |
| | | | | WO | 2020103354 | A1 | 28-05-2020 |
| US 2020143174 | A1 | | 07-05-2020 | CN | 113039580 | A | 25-06-2021 |
| | | | | US | 2020143174 | A1 | 07-05-2020 |
| | | | | US | 2022092318 | A1 | 24-03-2022 |
| | | | | WO | 2020096769 | A1 | 14-05-2020 |

EPO FORM P0459

For more details about this annex : see Official Journal of the European Patent Office, No. 12/82